# EUROPEAN PATENT APPLICATION

(11) **EP 3 108 988 A1**
(43) Date of publication of application: **28.12.2016**
(21) Application number: 15173620.4
(22) Date of filing: 24.06.2015
(51) Int. Cl.: B23D 61/02, B23C 5/08, B23C 5/00, B29C 45/14

(54) **CUTTING TOOL AND METHOD FOR PRODUCING SUCH A CUTTING TOOL**

(71) Applicant: Hou, Jiaxiang, Fujian 361012 (CN)
(72) Inventor: Hou, Jiaxiang, Fujian 361012 (CN)
(74) Representative: DREISS Patentanwälte PartG mbB

(57) **Abstract**

In order to enable a simple and cost-effective construction of a cutting tool having low cutting noises a cutting tool (10) is characterized by comprising a metal sheet (12) having several passages (14) extending from a first side (16) of the metal sheet (12) to a second side (18) of the metal sheet (12) and two plastic sections (20, 22), one of which (20) is arranged on the first side (16) of the metal sheet (12) and the second one (22) on the second side (18) of the metal sheet (12), wherein the plastic sections (20, 22) are interconnected by portions extending through the passages (14).

A method for producing a cutting tool (10) is given.

## Description

The present invention relates to a cutting tool and to a method for producing such a cutting tool.

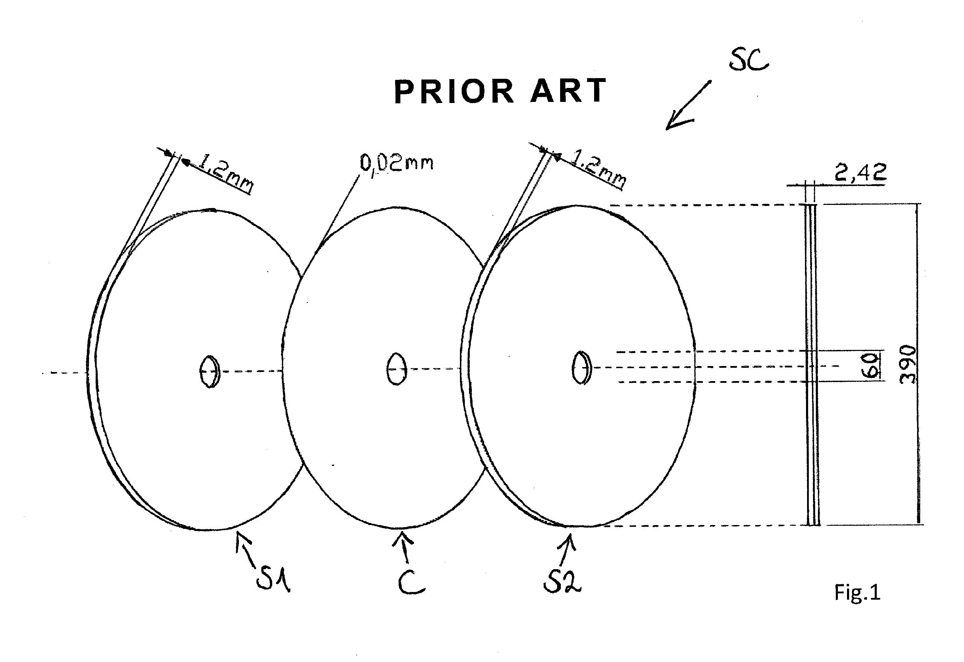

In today's diamond tools industry, manufacturers are using "silent core" as a diamond cutting tool's body blank to produce final products in order to reduce cutting noises. Currently, a common silent core is compound silent core, also called sandwich silent core. Its production method is touch welding of two steel sheets S1, S2 with one copper sheet C in their middle as a damping material, thereby becoming a one piece silent core SC (see Figure 1). Such cutting tools are being produced by core manufactures around the world.

Due to the need to prepare the steel and copper sheets, welding them together and applying a final treatment after welding, the production process is complex. Because of the compound construction, welding of cutting segments onto the compound core and sharpening of the cutting segments can cause distortion and unstable core strength. Furthermore, there is a limitation regarding the minimal core thickness due to core strength requirements. For example, the thickness of a sandwich type silent core having a diameter of 390 millimetres must be no less than 2,4 millimetres.

It is an object of the present invention to enable a simple and cost-effective construction of a cutting tool having low cutting noises.

The invention solves the problem with a cutting tool according to claim 1. Thus, the cutting tool is characterized by comprising a metal sheet having several passages extending from a first side of the metal sheet to a second side of the metal sheet and two plastic sections, one of which is arranged on the first side of the metal sheet and the second one on the second side of the metal sheet, wherein the plastic sections are interconnected by portions extending through the passages.

With the cutting tool according to the invention, a simplified construction of a cutting tool and a simplified production process can be achieved as only one steel sheet is necessary. Connecting of several parts can be avoided. Thus, production costs can be reduced by an amount of about 50 per cent and steady steel sheet quality can be reached.

Due to the one steel sheet construction, it is easier to adjust the steel core, e.g. regarding roundness and/or waviness, if it is distorted during production. Besides, better core strength for a constant cutting stability can be reached. As the steel sheet thickness can be adjusted and can also be even thinner than 1 millimetre, energy during usage of the cutting tool can be kept at a low level while also cutting noises can be reduced due to the plastic sections.

The metal sheet can preferably be made from steel.

The portions extending through the passages of the steel sheet can be formed as pin-like or cylindrical portions. The portions are preferably in contact with the passage walls thereby providing a large diameter for a strong connection of the plastic sections.

Preferably, the plastic sections and the portions extending through the passages are formed monolithically. Thus, the plastic sections can be connected in a simple constructive manner. High stability can be reached. Furthermore, the two plastic sections and their connecting portions act as one damping element thereby effectively reducing cutting noises. Forming can be done by injection molding.

Specifically, the metal sheet can have a circular shape. Thus, the metal sheet can be a blank for producing a cutting tool, namely a cutting wheel.

Particularly, the plastic sections can have a circular shape. Consequently, smooth running conditions of the cutting tool with good concentricity can be achieved.

Furthermore, it is advantageous, if at least one of the plastic sections covers the surface of the respective metal sheet side by at least 50%, preferably by at least 70%. With these dimensions cutting noises can be considerably reduced. A symmetrical arrangement of the plastic sections, with plastic sections having the same size, is preferred. It is advantageous, if a radial outer portion of the steel sheet is free of plastic sections in order to provide a steel sheet cutting area.

Preferably, the metal sheet comprises at least ten passages, preferably at least fifteen passages. With these numbers of passages strong connections can be realized, namely between the plastic sections themselves and between the plastic sections and the metal sheet.

For further optimizing the connection stability it is advantageous, if the passages have a diameter of at least 5 millimetres, preferably of at least 10 millimetres. Consequently, the portions extending through the passages can have a larger diameter so that they can withstand shear forces between the passage walls or passage edges and the portions.

Specifically, it is advantageous, if the metal sheet has a thickness of at least 1 millimetre. Already with this thickness a rigid cutting tool metal sheet can be realized and at the same time cutting energy can be kept at a low level. Possible metal sheet thicknesses can for example be 1 to 10 millimeters. Higher thicknesses are possible.

Furthermore, it is advantageous, if at least one of the plastic sections has a thickness of at least 2 millimetres. This thickness contributes to a reduction of cutting noises. A symmetrical arrangement with both plastic sections having a thickness of at least 2 millimetres is preferred. With such a symmetrical arrangement a considerable reduction of cutting noises and good running conditions of the cutting tool can be achieved. Possible plastic section thicknesses can for example be 2 to 10 millimeters. Higher thicknesses are possible.

Specifically, the plastic sections can be formed as sheets. Thus, the plastic sections are in contact with the metal sheets nearly over their complete size. Besides, the complete thickness of the cutting tool can be kept at a low level.

For achieving good cutting results it is advantageous, if the metal sheet comprises tooth-like sockets with diamond cutting elements mounted on the sockets. In other words, the cutting tool can be formed as a diamond cutting tool or a diamond cutting wheel, if the metal sheet and preferably also the plastic sections have a circular shape. Above all, a highly efficient cutting tool providing good cutting results and having comparatively low cutting noises can be achieved.

In other words, the cutting tool can preferably be formed as a cutting wheel having a round, i.e. a circular shape. The cutting tool can preferably be used as a diamond cutting tool with diamond cutting elements mounted on tooth-like sockets, i.e. arranged on the circumference of the cutting tool.

The above-mentioned problem can also be solved by a method having the features of the coordinate claim. The method for producing a cutting tool, especially a cutting tool having at least one of the above explained features, includes the following steps:
- providing a metal sheet having several passages extending from a first side of the metal sheet to a second side of the metal sheet,
- putting the metal sheet into a plastic injection mold and
- forming of a plastic section on each side of the metal sheet by injection molding.

In using a plastic injection mould, an easy production of the cutting tool can be achieved, as monolithical forming of the plastic sections is possible. The plastic material can flow through the passages of the metal sheet, thereby providing a strong monolithical connection of the plastic sections. Regarding further advantages that can be achieved with this method, reference is made to the explanations given in the context of claim 1.

The plastic injection mold can have a first part and a second part with the metal sheet arranged in their middle. The first and second part can each have at least one cavity being a negative form for forming a plastic section. Plastic material can be delivered from one of the first or second part thus flowing through the metal sheet passages.

The invention will be explained in more detail below with reference to the figures. Figures are showing:
- Fig.1: a cutting tool and a method for producing a cutting tool according to prior art;
- Fig.2: a metal sheet of a cutting tool according to the invention in a side view and in a front view; and
- Fig.3: a cutting tool according to the invention with metal sheet and plastic sheets in a side view an in a front view.

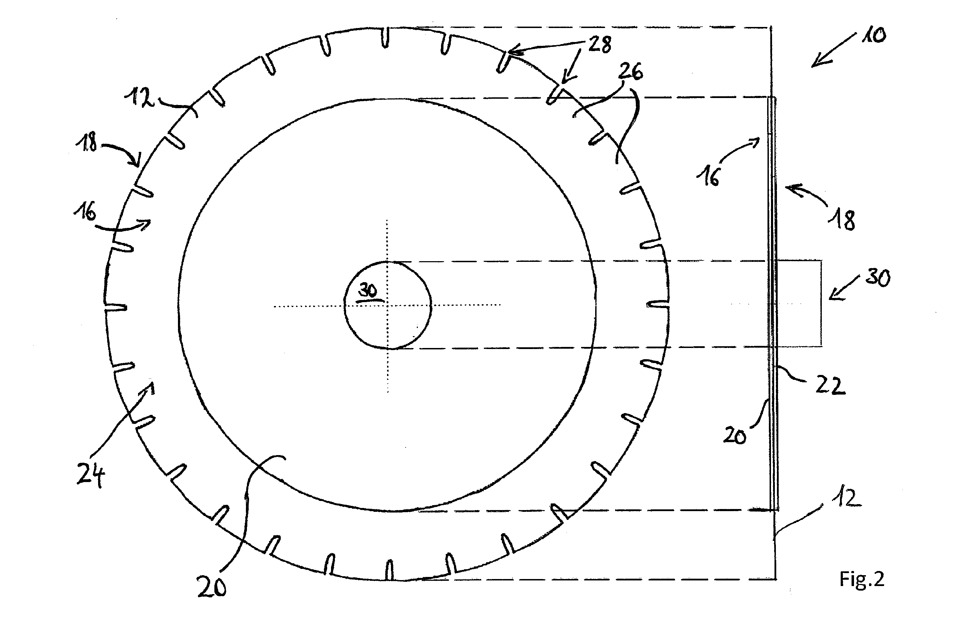

Figure 2 is showing a cutting tool which is generally indicated by reference numeral 10.

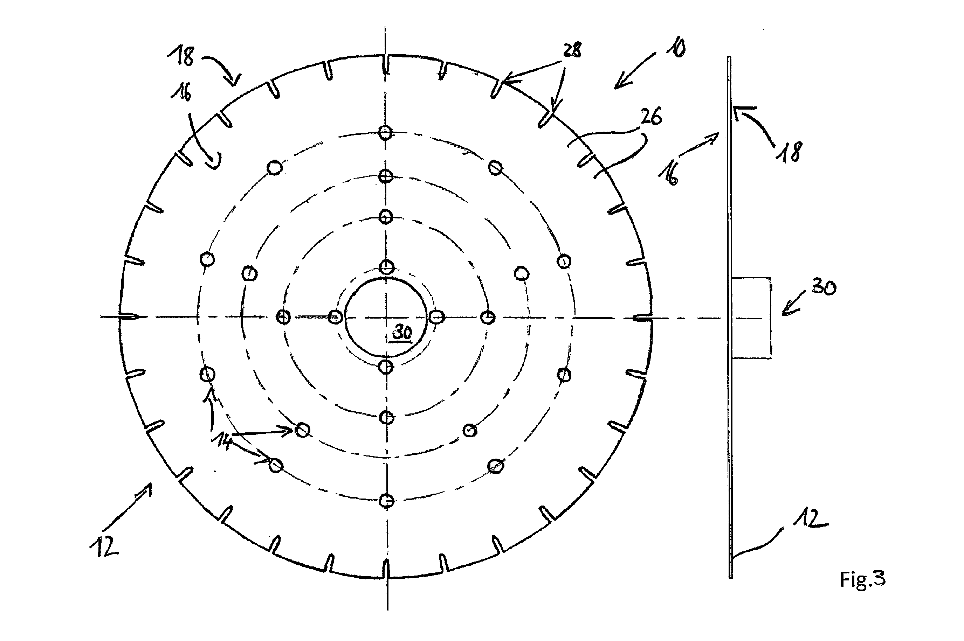

The cutting tool 10 comprises a metal sheet 12 having several passages 14 extending from a first side 16 of the metal sheet 12 to a second side 18 of the metal sheet 12 (cf. figure 3).

Furthermore, the cutting tool 10 comprises two plastic sections 20, 22, one of which is arranged on the first side 16 of the metal sheet 12 and the second one on the second side 18 of the metal sheet 12. The plastic sections 20, 22 are interconnected by portions extending through the passages 14 (not explicitly shown). These portions have a pin-like or cylindrical shape.

The plastic sections 20, 22 and the portions 24 are formed monolithically, namely by plastic injection molding.

The metal sheet 12 has a circular shape. The plastic sections 20, 22 also have a circular shape. Furthermore, the plastic sections are formed as sheets being in contact with a side surface of the metal sheet 12 over their complete size.

In other words, the metal sheet 12 has a generally disc-like shape with several passages 14. Furthermore, the plastic sections 20, 22 also have a generally disc-like shape. The plastic sections 20, 22 are connected by portions extending through the passages 14.

The plastic sections 20, 22 cover the surface of the respective metal sheet side 16, 18 by about 70%. An annular portion 24 on each side 16, 18 is free of plastic sections 20, 22 thereby providing a cutting area. Thus, an unhindered cutting of the cutting tool 10 is provided.

The metal sheet 12 comprises at least fifteen passages, particularly 23 passages in the present embodiment (cf. figure 3). The passages 14 have a diameter of at about 10 millimetres.

The metal sheet 12 has a thickness of 1 millimetre. The plastic sections 20, 22 have a thickness of 2 millimetres.

The metal sheet 12 comprises tooth-like sockets 26 with diamond cutting elements mounted on the sockets 26 (not shown).

The metal sheet 12 comprises 28 sockets 26 in the present embodiment. The sockets 26 are separated by gaps 28 having a width of 3 millimetres and a depth of 14 millimetres (cf. figure 3).

The metal sheet 12 and the plastic sections 20, 22 have a central opening 30. This opening 30 can be used for mounting the cutting tool 10 onto a cutting machine. In the present embodiment the central opening 30 has a diameter of 60 millimetres.

## Claims

1. Cutting tool (10) comprising a metal sheet (12) having several passages (14) extending from a first side (16) of the metal sheet (12) to a second side (18) of the metal sheet (12) and two plastic sections (20, 22), one of which (20) is arranged on the first side (16) of the metal sheet (12) and the second one (22) on the second side (18) of the metal sheet (12), wherein the plastic sections (20, 22) are interconnected by portions extending through the passages (14).

2. Cutting tool (10) according to claim 1, **characterized in that** the plastic sections (20, 22) and the portions are formed monolithically.

3. Cutting tool (10) according to claim 1 or 2, **characterized in that** the metal sheet (12) has a circular shape.

4. Cutting tool (10) according to one of the preceding claims, **characterized in that** the plastic sections (20, 22) have a circular shape.

5. Cutting tool (10) according to one of the preceding claims, **characterized in that** at least one of the plastic sections (20, 22) covers the surface of the respective metal sheet side (16, 18) by at least 50 per cent, preferably by at least 70 per cent.

6. Cutting tool (10) according to one of the preceding claims, **characterized in that** the metal sheet (12) comprises at least ten passages (14), preferably at least 15 passages (14).

7. Cutting tool (10) according to one of the preceding claims, **characterized in that** the passages (14) have a diameter of at least 5 millimeters, preferably of at least 10 millimeters.

8. Cutting tool (10) according to one of the preceding claims, **characterized in that** the metal sheet (12) has a thickness of at least 1 millimeter.

9. Cutting tool (10) according to one of the preceding claims, **characterized in that** at least one of the plastic sections (20, 22) has a thickness of at least 2 millimeters.

10. Cutting tool (10) according to claim 1 or 2, **characterized in that** the plastic sections (20, 22) are formed as sheets.

11. Cutting tool (10) according to one of the preceding claims, **characterized in that** the metal sheet (12) comprises tooth-like sockets (26) with diamond cutting elements mounted on the sockets (26).

12. Method for producing a cutting tool (10), especially according to one of the preceding claims, including the following steps:
- providing a metal sheet (12) having several passages (14) extending from a first side (16) of the metal sheet (12) to a second side (18) of the metal sheet (12),
- putting the metal sheet (12) into a plastic injection mould and
- forming of a plastic section (20, 22) on each side (16, 18) of the metal sheet (12) by injection molding.

## Amended claims

### Amended claims in accordance with Rule 137(2) EPC.

1. Cutting tool (10) comprising a metal sheet (12) having several passages (14) extending from a first side (16) of the metal sheet (12) to a second side (18) of the metal sheet (12) and two plastic sections (20, 22), one of which (20) is arranged on the first side (16) of the metal sheet (12) and the second one (22) on the second side (18) of the metal sheet (12), wherein the plastic sections (20, 22) are interconnected by portions extending through the passages (14), **characterized in that** at least one of the plastic sections (20, 22) covers the surface of the respective metal sheet side (16, 18) by at least 70 per cent, wherein an annular radial outer portion (24) of the metal sheet (12) is free of plastic sections (20, 22) thereby providing a cutting area and wherein at least one of the plastic sections (20, 22) has a thickness of at least 2 millimeters.

2. Cutting tool (10) according to claim 1, **characterized in that** the plastic sections (20, 22) and the portions are formed monolithically.

3. Cutting tool (10) according to claim 1 or 2, **characterized in that** the metal sheet (12) has a circular shape.

4. Cutting tool (10) according to one of the preceding claims, **characterized in that** the plastic sections (20, 22) have a circular shape.

5. Cutting tool (10) according to one of the preceding claims, **characterized in that** the metal sheet (12) comprises at least ten passages (14), preferably at least 15 passages (14).

6. Cutting tool (10) according to one of the preceding claims, **characterized in that** the passages (14) have a diameter of at least 5 millimeters, preferably of at least 10 millimeters.

7. Cutting tool (10) according to one of the preceding claims, **characterized in that** the metal sheet (12) has a thickness of at least 1 millimeter.

8. Cutting tool (10) according to claim 1 or 2, **characterized in that** the plastic sections (20, 22) are formed as sheets.

9. Cutting tool (10) according to one of the preceding claims, **characterized in that** the metal sheet (12) comprises tooth-like sockets (26) with diamond cutting elements mounted on the sockets (26).

10. Method for producing a cutting tool (10), especially according to one of the preceding claims, including the following steps:
- providing a metal sheet (12) having several passages (14) extending from a first side (16) of the metal sheet (12) to a second side (18) of the metal sheet (12),
- putting the metal sheet (12) into a plastic injection mould and
- forming of a plastic section (20, 22) on each side (16, 18) of the metal sheet (12) by injection molding, **characterized in that** the plastic injection mould has a first part and a second part with the metal sheet (12) arranged in their middle and that plastic material can be delivered from one of the first or second part thus flowing through the metal sheet passages (14).
